Europäisches Patentamt

European Patent Office

Office européen des brevets

(11) Publication number:

**0 288 899**

**A2**

# EUROPEAN PATENT APPLICATION

(21) Application number: 88106359.8

(22) Date of filing: 21.04.88

(51) Int. Cl.⁴ **A47J 31/043**

(30) Priority: 30.04.87 CH 1638/87

(43) Date of publication of application:
**02.11.88 Bulletin 88/44**

(84) Designated Contracting States:
**AT BE DE ES FR GB GR IT**

(71) Applicant: **Ribi, Valentino**
**252 Route de Saint-Maurice**
**CH-1814 La Tour de Peilz(CH)**

(72) Inventor: **Ribi, Valentino**
**252 Route de Saint-Maurice**
**CH-1814 La Tour de Peilz(CH)**
Inventor: **Ribi, Guido**
**252 Route de Saint-Maurice**
**CH-1814 La Tour de Peiltz(CH)**

(74) Representative: **Ferrarotti, Giovanni**
**Studio Consulenza Tecnica Dr. Ing. Giovanni**
**Ferrarotti Via Alla Porta Degli Archi 1/7**
**I-16121 Genova(IT)**

(54) **Coffee making method and related coffee machine.**

(57) To let the water pass quickly through the ground coffee layer at a temperature below 100°C, the water is heated to the desired temperature and is then vacuum drawn through the powdered coffee, the vacuum being generated by steam cooling and condensation. A coffee machine, consisting of an upper vessel (2) which can be tightly connected to a lower vessel (1) with the interposition of a coffee filter basket (4) is fitted with a rising transfer tube (9) extending from just above the bottom of the lower vessel (1) upwards to the upper vessel (2) and with a shut-off valve (13) which opens in direction of the upper vessel (2), while this upper vessel (2) is communicating by means of a siphon (19, 20) with the coffee filter basket (4) which, in turn, is at its lower end connected to the lower vessel (1) by means of a non-return valve (17, 18) that can be opened in direction of the lower vessel (1).

This Patent covers a coffee machine and coffee making method.

According to hitherto known methods, involving conventional Espresso Coffee Machines, the water is heated to over 100°C in a boiler-like vessel and is then forced through the ground coffee layer by pressure of the steam generated in this vessel. Since the water temperature is higher than 100°C, at least initially, many ground coffee fractions are also dissolved in the water and this is undesirable because of their bad taste. Conversely, the rather quick flow of the water through the ground coffee reduces the amount of dissolved alkaloids in the powdered coffee thus reducing the stimulating action of the coffee. According to another known method, based upon the utilization of so called "Neapolitan coffee-pots", the water is heated in a pot located below the ground coffee and is then gravity transferred through the coffee layer, by turning the pot upside down and collecting the beverage in another vessel previously fitted on the coffee filter. In this case, the temperature of the water percolated through the ground coffee layer is always less than 100°C so that undesirable coffee fractions are not dissolved in the coffee, since these fractions are only soluble at a higher than 100°C temperature. However, gravity percolation takes a relatively long time so that a greater amount of alkaloids is dissolved in the coffee. The coffee thiu obtained has a better flavour and smell but is highly stimulant. The same holds true for all coffee preparation methods based on infusion and filtering.

The invention has the aim to eliminate these drawbacks and to join the advantages of both described methods, resulting in a method by which the water is rapidly filtered through the powdered coffee at less than 100°C , thus reducing the amount of unpleasant tasting dissolved aromatic fractions as well as the alkaloid content of the ground coffee beans, resulting in coffee having an excellent flavour and smell but with a low stimulating action.

This problem is solved by the invention as follows: the hot water used for coffee making is suction filtered through the powdered coffee layer. In this way, the water to be percolated through the coffee can be heated by any system whatsoever and up to any temperature, usually less than 100°C and the filtration time can be fixed and adjusted at will and may even be very short.

Suction of the heated water through the coffee layer may be achieved by anyone technique, preferably under vacuum in the pot or vessel in which the final beverage is collected, communicating through the powdered coffee layer with the hot water vessel. The vacuum in the collecting coffee pot may be generated by any method, preferably by steam condensation in the above mentioned vessel.

In a preferred implementation mode of the invention, the vacuum is generated in the coffee pot by boiling and evaporating the water in the coffee and then letting the water cool down and condensing the steam. In this case, according to an advantageous implementation form, the water to be filtered through the powdered coffee layer is first brought to its boiling point in the so called "main vessel" in which the beverage is to be collected, and is then poured or even better "ejected" by steam pressuree in an auxiliary vessel from which it is again transferred by suction into the main pot, through the coffee layer, due to the vacuum generated in the main vessel by cooling and condensation of the residual steam. In another implementation form of this invention, a limited quantity of water is boiled in the first vessel in which the final beverage is to be collected. The steam of this water is used for heating by bubbling or mixing of the water to be filtered through the powdered coffee layer in a separate vessel; the residual steam in the first vessel is then cooled down and condensed to generate a vacuum forcing the water heated in the auxiliary vessel, through the ground coffee layer.

Steam cooling and condensation in the final coffee pot can be achieved by any technique, especially spontaneously by natural heat dissipation in the ambient air when the machine is removed from its heat source.

This coffee-making method according to the invention by drawing the hot water through the layer of powdered coffee can be adopted both at home with a domestic coffee machine and in bars or the like. In the latter case, suction of hot water through the coffee layer can be achieved by generating suction inside the vessel in which the final beverage is to be collected, by means of proper vacuum pumps or aspirators.

A preferred implementation mode of such a coffee machine for household appliance according to this invention is schematically illustrated in the vertical section of the only one enclosed drawing and will be described in detail hereinafter.

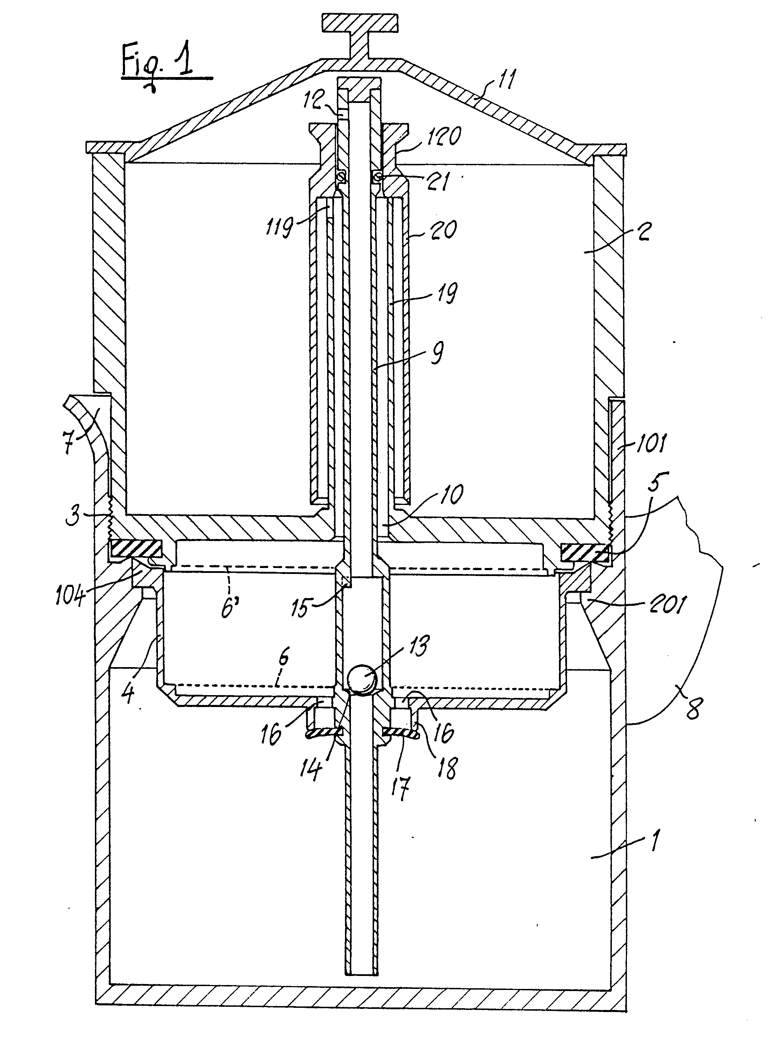

With reference to the drawing, the coffee machine is consisting of a lower vessel 1 or so called main vessel and an upper vessel 2, called "auxiliary vessel". The lower portion of the auxiliary vessel 2 is fitted in an upper extension 101 of the lower main vessel 1 and is then screwed onto the latter (threading 3) as shown in the drawing, or by a bayonet joint or the like. The small external flange 104 of a mobile coffee filter basket 4 in which the ground coffee is packed, is locked between an ring-shaped projecting rib 201 of the lower main vessel 1 and the bottom of the auxiliary upper vessel 2. An anular gasket 5, fitted in a groove of the auxiliary vessel 2 provides a perfect seal between vessel 2, the main vessel 1 and the small flange 104 of the coffee basket 4.

At some distance from its bottom, the coffee filter basket is provided with a preferably removable, perforated disk 6 or strainer or the like. A similar, preferably removable, perforated disk 6 or strainer or the like is located between the coffee basket 4 and the auxiliary upper vessel 2, at a certain distance from its bottom. These perforated disks or strainers will prevent the coffee from being entrained by the hot water flow.

The lower vessel 1 is preferably provided with a grip 8 and with a pouring spout 7 located at its upper extension 101 above the threading 3. The upper vessel may have a lid 11. In other implementation forms, the pouring spout may be fitted with valves or cocks incorporated in the the main vessel (1).

A so called "transfer" tube or riser 9 is located centrally in the two vessels 1 and 2 starting a bit above the bottom of the lower vessel 1 up to almost the top of the upper vessel 2 passing through the sealed off bottom of the coffee filter basket 4 and through a hole in the bottom of the upper vessel 2. This hole 10 has a much larger diameter than the outside diameter of the transfer tube 9. The transfer tube is closed at its upper end and has one or more lateral ports 12. The transfer riser 9 may be secured onto the coffee basket 4 or its lower part may be integral with the coffee filter basket 4 as shown in the drawing. In another implementation mode, not shown in the drawing, the transfer tube 9 may be removable, i.e. separated from the coffee basket 4 and supported by the latter. The transfer tube may also be located outside the two vessels 1 and 2 and may be incorporated, for example, in the properly shaped grip of the coffee machine.

The transfer rube 9 is fitted with a shut-off valve which opens in upward flow direction and automatically closes when the flow is downward. In the exemplified implemention, this shut-off valve (which may be of any design) is consisting of a valve 13 cooperating with its cone shaped seat 14. The upwards movement of the ball 13 is limited by one or more catches 15 located inside the transfer tube 9 and designed so as to prevent the ball 13 from moving too far upwards without shutting off the upward flow in the riser 9. In the praxis, the above described shut-off valve may have a tubular body fitted between an upper and a lower section of the transfer tube 9. In another practical implementation, the transfer tube 9 may consist of two lengths, the lower section of which has a seat 14, whereas the upper section has catches 15, both sections being separable for introduction of the ball 13.

One or more ports 16, closed by a non-return valve are located at the bottom of the coffee basket 4. This non-return valve opens when the flow is downwards and will autoomatically close during upward flow.

This shut-off valve may also be designed and implemented in any appropriate form. In the exemplified drawing, this valve is consisting of a flexible disk 17, providing a perfect, flexible seal against the ring shaped seat located around the perforations 16.

The hole 10 in the bottom of the upper auxiliary vessel is connected to the chamber of this vessel by means of a siphon, consisting of an internal riser tube 19 coaxially fitted around the transfer tube 9 at some radial distance from the latter, and of a an external riser tube 20, coaxially surrounding the internal tube 19 thus forming a hollow space between the two tubes (19 and 20). The internal tube 19 of the siphon is connected to the bottom of the upper vessel 2 around the hole 19 and may be even integral with the bottom. The edge at the upper end of the internal siphon tube 19 shall have at least one slot 119 or it shall be toothed so as to form lateral ports. The internal siphon tube has a perforated head 120 at its upper end; this head is mobile inserted and sealed onto the upper end of the transfer tube 9 while resting on the upper edge of the internal siphon tube 19. The external siphon tube 20 terminates with its lower end located just above the bottom of the upper vessel 2. An O-ring gasket 21 provides a seal between the transfer tube 9 and the head 120 of the external siphon tube 20.

The above description clearly shows that the coffee machine thus illustrated is essentially consisting of only four main components (without the lid 11) all easily removable and assembled for use and also very easy too clean.

According to this coffee-making method, the lower vessel 1 is filled with water and the required quantity of ground coffee is packed in the basket. The machine is assembled as described above and placed on a heat source. When the water in the lower vessel starts boiling, steam pressure is generated so that the boiling water is moved upwards in the transfer tube 9, causing automatic opening of the shut-off valves 13, 14 so that the water enters the upper vessel 2 through the lateral ports in the transfer tube 9. The coffee machine is then removed from the heat source, the residual steam in the lower vessel condenses, causing a vacuum in the lower vessel 1 and aspiration of the hot water, which has meanwhile cooled down to less than 100°C., from the upper vessel 2 through the siphon 19,20 and through the coffee layer in the filter basket 4 into the lower vessel 1. When returning (by suction) into the lower vessel 1, the water flows through the hollow space between the external tube 20 and the inner tube 19 of the siphon, then through the slots 119 in the upper edge of the internal tube 19 and subsequently through the hollow space between the inner siphon tube 19 and the transfer tube 9, leaving the upper vessel through the opening 10 in its bottom, and then passing through the powdered coffee packed between the two perforated disks or strainers 5,6 in the coffee filter basket 4, thus entering the lower vessel 1, ready as a beverage, through one or more holes in the bottom of the coffee filter basket 4, which causes automatic opening of the shut-off valve 17, 18. The final beverage is thus collected in the lower vessel 1 and is poured through a spout 7 after disassembly of the upper vessel and removal of the coffee drag from the filter basket. As already explained above, the coffee may also be poured through the spout fitted with a valve or cock incorporated in the lower main vessel 1.

It should be observed that the shut-off valve 17, 18 closes when the water in the lower vessel 1 starts boiling, thus preventing the boiling water from moving directly upwards through the powdered coffee layer in the filter basket 4. When the water has entered the upper vessel 2, it is advisable also to discharge the steam entrained air from the lower vessel 1 before removing the lower vessel 1 from its heat source. Cooling of the lower vessel 1 so that the steam can condense and form the vacuum necessary for aspiration of the hot water from the upper vessel 2, can be achieved by any suitable system. Usually, natural cooling by the ambient temperature and/or contact of the coffee machine with a cold surface (table, top of kitchen range, plate, marble top or the like) will be sufficient. The water in the lower vessel may be heated by any source, but special electric heaters may also be provided, such as heating elements, to be built into thee lower vessel.

Obviously, the above described coffee machine may be subject to many structural variations. Thus, for instance, the transfer tube 9 and/or the siphon formed by the two tubes 19, 10 may be replaced by equivalent ducts, machined in the wall thickness of the lower vessel 1 and the upper vessel 2 and/or located outside these vessels. The two shut-off valves 13, 14 and 17, 18 may be implemented in any other suitable way and they may be located anywhere. The lower vessel 1 may be externally finned to improve heat exchange with the ambient air thus accelerating cooling and steam condensation. Conversely, by properly increasing the wall thickness of the upper and lower vessel, the steam condensing process may be delayed for proper vacuum formation in the lower vessel 1 and/or faster cooling of the hot water in the upper vessel 2, so that the water temperature can be lowered to the desired value before it is drawn back to the lower vessel 1 through the coffee layer.

In a variation of the above described coffee machine, the transfer tube or riser 9 enters the lower part or bottom of the upper vessel 2 instead of being released in the upper portion of this vessel. In such case, the related shut-off valve is preferably located near the bottom of the upper vessel 2 or may be incorporated in the bottom. In this configuration, the coffee may be made as described above with reference to the drawing or as follows: the hot water required for coffee making is poured from the beginning in the upper vessel 2 while a small amount of water is brought to boiling point in the lower vessel 1 by heating. The generated steam flows through the transfer tube or riser into the upper vessel 2 causing the water in vessel 2 to bubble while heating it. When the water in the lower vessel has completely evaporated, the residual steam is cooled down and condensed to generate a vacuum to siphon the hot water from the upper vessel 2 through the powdered coffee in the filter basket 4 back into the lower vessel 1 thus obtaining the beverage described before. When adopting this coffee making method, the temperature of the heated water siphoned through the powdered coffee layer depends on the initial quantity of water in the lower vessel 1 providing the steam for bubbling and heating of the water in the upper vessel 2. The temperature of the water used to make the coffee can therefore be set and adjusted with great accuracy. For example, the amount of water to be evaporated in the lower vessel 1 shall be about 10-15% of the water in the upper vessel 2 to obtain a temperature of about 80°C.

In another configuration of the coffee machine according to this invention, the filter basket 4 is communicating with its lower end with the lower vessel 1 by means of a priming tube without shut-off valve, while its upper end is connected to the upper vessel 2 by means of a siphon formed by the two concentric tubes 19 and 20 which are also without shut-off valve. This coffee machine may be used for so called "double pass" coffee making. The water heated in the lower vessel 1 first flows upwards through the powdered coffee packed in the filter basket due to the steam pressure generated by boiling, as in conventional coffee machines. Then, after condensation of the residual steam in the lower vessel 1, the vacuum thus generated causes aspiration of the beverage collected in the upper vessel 2 while drawing it once more, this time downwards, through the powdered coffee layer. After this second pass the coffee is collected in the lower vessel 1. This double pass method permits better utilization of the ground coffee and, hence, considerable savings as compared with conventional coffee making methods and machines while obtaining, with less coffee, a beverage at least as strong and aromatic as can be obtained by conventional systems. According to yet another method applicable to the coffee machine subject matter of this patent, part of the water required for coffee making, e.g. about 50%, is poured into the main or lower vessel 1, whereas the remainder is poured cold or at ambient temperature in the ausiliary vessel 2, to obtain an optimum temperature of the water to be siphoned by suction through the powdered coffee layer. When the water in the main vessel 1 reaches its boiling point and flows upwards through the transfer tube 9 into the upper vessel 2, due to the steam pressure generated by ebullition, this hot water will mix with the relatively cold water in the upper vessel 2. This mixed water will have an optimum temperature, less than 100°C, and will then be drawn through the coffee packed in the filter basket, due to the vacuum generated by residual steam condensation in the lower vessel 1. This method considerably reduces the time required for coffee making (by about 30%).

## Claims

1. Coffee making method, **characterized** by the fact that the hot water for coffee making is suction drawn through the powdered coffee layer.

2. Method as described in Claim 1, **characterized** by the fact that suction of the hot water through the powdered coffee layer is achieved by generating a vacuum in vessel (1) in which the beverage will be collected, communicating through this coffee layer with a vessel 2 containing the hot water.

3. Method as described in Claim 1 and 2, **characterized** by the fact that the vacuum in vessel (1) in which the final beverage is to be collected, is generated by steam condensing in this vessel (1).

4. Method as described in the Claims 1 thru 3 **characterized** by the fact that the vacuum generated in vessel (1) in which the final beverage is to be collected, is generated by ebullition and evaporation of water in this vessel (1) followed by steam cooling and condensation.

5. Method as described in the Claims 1 thru 4, **characterized** by the fact that the water to be passed through the powdered coffee layer is first brought to ebullition in vessel (1), called "main vessel" in which the final beverage will also be collected, and is then transferred, preferably by spouting caused by the steam pressure, from the lower or main vessel (1) into the upper or "auxiliary" vessel (2) from which it is siphoned back through the powdered coffee layer into the main lower vessel (1) through the effect of vacuum generated in the main vessel (1) due to cooling and condensing of residual steam.

6. Method as described in the claims 1 thru 4, **characterized** by the fact that a limited quantity of water is brought to boiling point in the first vessel (1) in which the final beverage will be collected; the steam from this boiling water being used to bubble heat the water contained in the upper vessel (2) which is to pass through the ground coffee layer, while the residual steam in the first vessel (1) is cooled down and condensed thus generating the vacuum necessary for aspiration of the heated water from the auxiliary vessel (2) through the powdered coffee layer.

7. Method as described in claim 1, **characterized** by the fact that the hot water required for coffee making, is passed twice through the powdered coffee layer, first under pressure and later by suction or vice-versa.

8. Method as described in claim 7, **characterized** by the fact that the water required for coffee making is brought to ebullition in a first vessel (1) and is than pressure spouted from the first vessel (1) through the powdered coffee layer, into an auxiliary vessel (2) from which it is once more vacuum drawn through the coffee layer into the lower vessel (1) due to cooling and condensing of residual steam.

9. Method as described in the claims 1 thru 4, **characterized** by the fact that part of the water needed to make coffee is brought to ebullition in a first vessel (1) and is then spouted under steam pressure from the first vessel (1) through the powdered coffee layer into an auxiliary vessel (2) containing the remaining water necessary for coffee making at a lower temperature, for instance ambient temperature; the water mixture thus obtained is siphoned back from vessel (2) into vessel (1) passing through the powdered coffee layer due to the vacuum generated in the first vessel (1) by cooling and condensing of residual steam.

10. Coffee machine for the application of the methods described in claims 1 thru 4, in particular in claim 5, **characterized** by the fact that this machine is consisting of a lower vessel (1), an upper vessel (2) and a coffee filter basket (4) in which the powdered coffee is packed, the upper vessel (2) being removable and connected by a tight gasket to the lower vessel (1), while a transfer riser (9) starting just above the bottom of the lower vessel (1) leads into the upper vessel (2), this transfer tube (9) being fitted with a shut-off valve (13, 14) which can be opened in direction of the flow towards the upper vessel (2), while the upper vessel (2) is communicating through a siphon (19, 20) with thee upper end of the coffee filter basket (4) the bottom of which is connected to the lower vessel (1) by means of a shut-off valve (17, 18) which opens in direction of the downward flow towards the lower vessel (1).

11. Coffee machine as described in claim 10, **characterized** by the fact that the transfer riser is consisting of a tube (9) incorporated in the coffee basket bottom and extending through a hole in the bottom of the upper vessel (2) to the upper portion of this vessel (2) where the tube (9) is provided with one or more -preferably lateral positioned - outlet openings, whereas the siphon is consisting of two radially spaced concentric tubes (19, 20) the innermost of which (19) is communicating through its lower end with the hole (10) in the bottom of the upper vessel (2) and is integral with this bottom, while extending upwards with a radial spacing around the transfer tube (9) and communicating at its upper end with the hollow space between the two tubes (19,20) of the siphone, the external tube (20) being mobile fitted on the upper end of the transfer tube (9), extending downwards until just above the bottom of the upper vessel (2).

12. Machine as described in the claims 10 and 11, **characterized** by the fact that the shut-off valve associated with the transfer tube (9) is consisting of a ball valve (13, 14) mounted on the transfer tube (9), whereas the shut-off valve associated with the coffee filter basket (4) is consisting of a circle of holes (16) machined in the bottom of the coffee filter basket and closed at its lower end by a flexible or elastic disk, centrally fixed to the transfer tube (9) and peripherally cooperating with a valve seat (18) located around the circle of holes (16).

13. Machine as described in claim 10, in particular for the implementation of the method described in claim 6, **characterized** by the fact that the transfer tube (9) end on the bottom of the upper vessel (2) or in its lower portion.

14. Coffee machine for the implementation of the method described in the claims 7 and 8, **characterized** by the fact that it includes a lower vessel (1), an upper vessel (2) and an intermediate coffee filter basket (4) in which the powdered coffee is packed, the lower vessel (2) being removable and connectable by means of a sealing gasket to the lower vessel (1), while the coffee filter basket (4) is connected to the upper vessel (2) by means of a siphon (19, 20) and is communicating with the lower vessel (1) by means of a priming tube extending from the bottom of the above basket (4) until just above the bottom of the lower vessel (1).

Fig. 1